# EUROPÄISCHE PATENTSCHRIFT

(11) **EP 2 903 421 B1**
(45) Veröffentlichungstag und Bekanntmachung des Hinweises auf die Patenterteilung: **16.03.2016**
(21) Anmeldenummer: 13770651.1
(22) Anmeldetag: 23.09.2013
(51) Int. Cl.: C08G 101/00, B32B 27/06, B32B 27/30, B32B 27/32, B32B 27/36, C08J 9/36, A01K 1/015

(54) **STALLBODENBELAG AUS EXPANDIERTEM THERMOPLASTISCHEM POLYURETHAN-PARTIKELSCHAUMSTOFF**
STALL FLOOR LINING MADE FROM EXPANDED THERMOPLASTIC POLYURETHANE PARTICLE FOAM
GARNITURE DE SOL D'ÉCURIE À BASE DE MOUSSE À PARTICULES DE POLYURÉTHANE THERMOPLASTIQUE EXPANSÉ

(30) Priorität: 02.10.2012 EP 12186917
(43) Veröffentlichungstag der Anmeldung: 12.08.2015
(73) Patentinhaber: BASF SE, 67056 Ludwigshafen (DE)
(72) Erfinder: SCHMITT, Wilfried, 67133 Maxdorf (DE); KEPPELER, Uwe, 67126 Hochdorf-Assenheim (DE)
(86) Internationale Anmeldenummer: PCT/EP2013/069656
(87) Internationale Veröffentlichungsnummer: WO 2014/053343

(56) Entgegenhaltungen:
- EP-A1- 1 917 852
- EP-B1- 1 979 401
- DE-A1- 4 307 648
- DE-U1- 7 637 869
- US-A1- 2010 047 550

## Beschreibung

Die Erfindung betrifft einen Stallbodenbelag, enthaltend eine Schaumstoffmatte umfassend expandierten thermoplastischen Polyurethan-Partikelschaumstoff, Verfahren zu dessen Herstellung sowie die Verwendung von expandiertem thermoplastischen Polyurethan-Partikelschaumstoff zur Herstellung des Stallbodenbelags (im Rahmen dieser Anmeldung werden thermoplastische Polyurethane auch als "TPU" und expandierte thermoplastische Polyurethane auch als "E-TPU" bezeichnet).

Der Begriff "Stallbodenbelag" im Sinne der vorliegenden Erfindung umfaßt nicht nur Bodenbeläge im Bereich der Stallungen, also der eigentlichen Daueraufenthaltsbehausungen für Tiere, sondern auch Beläge für sämtliche Böden, auf denen sich Tiere kurz- oder langfristig aufhalten, beispielsweise auch Bodenbeläge im Bereich von Liegeboxen, Boxengassen, Laufgängen oder Führanlagen für Tiere.

Die Anforderungen an Stallbodenbeläge können je nach Tierart und Einsatzgebiet recht unterschiedlich sein. So unterscheiden sich die Anforderungen bei einer Nutztierhaltung (z.B. von Milchkühen oder Schweinen) beispielsweise von denen der Pferde- oder Hundehaltung. Auch die Anforderungen an Bodenbeläge für die Stallungen, die Liegebox, die Boxengasse, die Führanlagen, der Außenflächen etc. sind jeweils unterschiedlich. Dennoch gibt es für bestimmte Eigenschaften Anforderungen, die für alle Stallbodenbeläge und für alle Tierarten relevant sind. Die Stallbodenbeläge beispielsweise für Milchkühe (sogenannte Kuhmatratzen) haben zum Ziel das Wohlbefinden der Kühe zu verbessern und damit die Milchleistung zu erhöhen. Daher werden neben guten thermischen Isoliereigenschaften eine hohe Rutschfestigkeit und hohe mechanische Beanspruchbarkeit gefordert. Ebenso sollte eine ausgewogene Weichheit gegeben sein. Grundsätzlich wäre zwar eine möglichst hohe Weichheit anzustreben, allerdings darf die in der Regel mit zunehmender Weichheit auch größer werdende Eindringtiefe nicht so weit gehen, daß der Stallbodenbelag so stark komprimiert wird, daß er seine Dämpfungseigenschaften zu sehr einbüßt und der Liegekomfort des Tiers beeinträchtigt wird. Eine gleichbleibende hohe Gummielastizität unter Dauerbelastung (geringer Druckverformungsrest) wird ebenfalls gefordert. Die Kuhmatratze sollte aus hygienischen Gründen möglichst wenig Feuchtigkeit aufnehmen. Außerdem sollte die Kuhmatratze eine chemische Beständigkeit gegenüber Urin, Kot und Milchsäure aufweisen.
Weiterhin sollten Kuhmatratzen formstabil und leichtgewichtig beschaffen sein, so dass der technische Aufwand für ihre Verlegung möglichst gering ist. Zudem ist der wirtschaftliche Aspekt nicht zu vernachlässigen.

Zur Herstellung von Stallbodenbelägen die solchen Anforderungen möglichst nahe kommen, sind daher verschiedene Kunststoffmaterialien und Ausführungen bekannt.

So weisen beispielsweise Stallbodenbeläge aus massiven Gummimatten oder aus Gummigranulat, das mit Bindemittel zu Matten verarbeitet wurde, hohe mechanische Festigkeiten und geringe Feuchtigkeitsaufnahmen auf, sind jedoch bezüglich der thermischen Isolationswerte und der Verformbarkeit (Weichheit) verbesserungswürdig.
Stallbodenbeläge aus Schaumstoffen, beispielsweise Polyurethan-Flockenverbundschaumstoffen oder Latexschaumstoffen weisen demgegenüber eine wesentlich verbesserte thermische Isolierung und Verformbarkeit (Weichheit) auf, sind aber in der Regel aufgrund ihrer offenzelligen Schaumstoffstruktur bezüglich ihrer mechanischen Festigkeit und Feuchtigkeitsaufnahme nachteilig. Diesen Nachteilen kann in gewissem Maße abgeholfen werden, indem die Schaumstoffmatten mit einer Folie verpackt werden und mit einer flüssigkeitsundurchlässigen und mechanisch stabilen Deckschicht versehen werden (Sandwichaufbau). Allerdings sind dazu komplexere Herstellverfahren nötig, die die entsprechenden Stallbodenbeläge verteuern. Die Folien können zudem während des Gebrauchs oder während der Reinigung, z.B. mit einem Hochdruckreiniger, beschädigt werden.

In der EP 1 917 852 A1 ist ein Bodenbelag für Tierställe beschrieben, der zwingend mindestens zwei Schichten S1 und S2 sowie ein Randabdichtungsmittel umfaßt, wobei S1 entweder ein Faserwerkstoff oder bevorzugt ein Schaumstoff sein kann, und S2 ein thermoplastisches Polymer P2 umfaßt. Als geeignete Polymere zur Ausbildung der Schaumstoffschicht S1 werden eine Vielzahl unterschiedlichster Kunststoffe genannt, bevorzugt sind PVC-, PE-, PP- und PE-Copolymerschäume, explizit genannt jedoch in keiner Weise genauer charakterisiert- werden ein PE-Schaum Trocellen^{®}classic C-MN3 von Trocellen GmbH und ein Polyurethan Ether Schaumstoff von Otto Bock Schaumstoffwerke GmbH. Als Material P2 zur Ausbildung der Deckschicht S2 werden eine Reihe von Polymeren als bevorzugt beschrieben, lediglich als eins von mehreren möglichen und nicht-bevorzugten Materialien P2 wird thermoplastisches Polyurethan genannt.
Bodenbeläge für Tierställe gemäß EP 1 917 852 A1 sind zwar ausreichend weich, jedoch als Unterlage für schwere Tiere wie Kühe aufgrund ihrer vergleichsweise großen Eindringtiefe sowie bezüglich der bleibenden Verformung und des Verschleißes bzw. Abriebs bei Dauerbelastung, insbesondere nach einer Beschädigung der Deckschicht S2, verbesserungswürdig.

Selbstverständlich sind im Stand der Technik auch Bodenbeläge beschrieben, die für andere Anwendungen entwickelt wurden, beispielsweise Sportböden. Allerdings sind die entsprechenden technischen Lehren nicht ohne weiteres auf Stallbodenbeläge übertragbar. So mag zwar manche Eigenschaft für jedwede Art von Bodenbelägen wünschenswert sein, z.B. gute Verschleißfestigkeit bei Dauerbelastung, jedoch ist die technisch Lösung zur Erreichung dieser Eigenschaft für eine Anwendung nicht ohne weiteres auch für eine andere Anwendung geeignet (z.B. weil die mechanische Belastung eines Sportbodens durch einen 75 kg schweren Sportler eine andere ist als die eines Stallbodens durch ein 750 kg schweres Huftier). Einige der o.g. Anforderungen an Stallböden sind für andere Bodenbeläge gar von vornherein ohne Belang (z.B. ist die Urinbeständigkeit für einen Sportboden in der Regel kein Kriterium).

Bodenbeläge aus Polyethylenschaumstoffen, wie sie beispielsweise in der DE 43 42 200 A als Turnmatten beschrieben werden, haben zwar eine gute Verformbarkeit und praktisch keine Feuchtigkeitsaufnahme, aber eine hohe bleibende Verformung nach Dauertrittbelastung, und sind daher als Stallbodenbeläge weniger gut geeignet.
Die US 2010/0047550 A1 offenbart Hybridmaterialien u.a. zur Verwendung in Schuhsohlen, Möbelpolstern und Bodenbelägen für Spielplätze, Laufbahnen, Sportplätzen und -hallen. Die Hybridmaterialien umfassen expandierte TPU-Partikel in einer Matrix aus Polyurethan. Die Polyurethan-Matrix kann dabei aus einem kompakten Material bestehen, beispielsweise aus einem viskoelastischen Gel oder einem TPU, oder aber einem geschäumten Material, beispielsweise einem Weichschaumstoff, einem Halbhartschaumstoff oder einem Integralschaumstoff. Die gute Anbindung der Matrix an die expandierten TPU-Partikel wird hervorgehoben, ebenso wie die guten mechanischen und elastischen Eigenschaften. Allerdings sind diese Hybridmaterialien als Stallbodenbelag nicht ohne weiteres einsetzbar, da die Verschleißfestigkeit bei hoher Dauerbelastung sowie die laut US 2010/0047550 A1 in weiten Bereichen einstellbare Wasserdurchlässigkeit noch verbesserungswürdig sind.

Aufgabe der vorliegenden Erfindung war es daher, einen leichten und einfach zu verlegenden Stallbodenbelag bereitzustellen, der die genannten Nachteile der im Stand der Technik beschriebenen Bodenbeläge nicht hat, der insbesondere eine verbesserte Kombination aus ausgewogener Weichheit (entsprechend einer ausgeprägten, aber nicht zu hohen Eindringtiefe), geringer bleibender Verformung bei Dauerbelastung, geringem Verschleiß bzw. Abrieb bei Dauerbelastung und geringer Feuchtigkeitsaufnahmen aufweist. Der Stallbodenbelag soll außerdem durch einfache Herstellverfahren, und somit kostengünstig, erhältlich sein.

Demgemäß wurde ein Stallbodenbelag, enthaltend eine Schaumstoffmatte umfassend expandierten thermoplastischen Polyurethan-Partikelschaumstoff, gefunden.

Der erfindungsgemäße Stallbodenbelag ist einfach und kostengünstig herstellbar, leicht und einfach zu verlegen und weist gegenüber bekannten Stallbodenbelägen eine verbesserte Kombination aus ausgewogener Weichheit (entsprechend einer ausgeprägten, aber nicht zu hohen Eindringtiefe), geringer bleibender Verformung bei Dauerbelastung, geringem Verschleiß bzw. Abrieb bei Dauerbelastung und geringer Feuchtigkeitsaufnahme auf. Die Schaumstoffmorphologie des erfindungsgemäßen Stallbodenbelags führt zu einer geringen Formteildichte und hoher thermischer Isolation. Der erfindungsgemäße Stallbodenbelag ist darüber hinaus gegen Tierausscheidungen dauerbeständig.

Die erfindungsgemäßen Stallbodenbeläge, die Verfahren zu ihrer Herstellung und die Verwendung von expandiertem thermoplastischem Polyurethan-Partikelschaumstoff zur Herstellung dieser Stallbodenbeläge werden im Folgenden näher beschrieben.

Zur Herstellung der erfindungsgemäßen Stallbodenbeläge enthaltend eine Schaumstoffmatte aus E-TPU-Partikelschaum sind grundsätzlich alle in der Literatur beschriebenen und dem Fachmann bekannten TPU geeignet.
Geeignete TPU und aufgeschäumte E-TPU-Partikel auf Basis von TPU sowie deren Herstellung sind beispielsweise offenbart in WO 94/20568 und WO 07/82838.

Bevorzugt einsetzbare TPU weisen eine Shore-Härte im Bereich von Shore A 50 bis Shore D 75, bevorzugt Shore A 60 bis Shore A 100, besonders bevorzugt Shore A 65 bis Shore A 85 auf, gemessen gemäß DIN ISO 7619-1 DE an Prüfkörpern aus nicht-expandiertem thermoplastischem Polyurethan mit einer Dicke von 6 mm.

Bevorzugt einsetzbare TPU sind insbesondere solche, bei denen der Schmelzbereich bei einer DSC-Messung mit einer Aufheizrate von 20K/min unterhalb von 130°C, besonders bevorzugt unterhalb von 120°C beginnt, und bei denen das thermoplastische Polyurethan bei 190°C und einem Auflagegewicht von 21,6 kg nach DIN EN ISO 1133 höchstens eine Schmelzflussrate (MFR) von 250 g/10 min, bevorzugt eine Schmelzflussrate von kleiner 200 g/10 min und besonders bevorzugt eine Schmelzflussrate von kleiner 150 g/10 min aufweist.

Thermoplastische Polyurethane und Verfahren zu deren Herstellung sind allgemein bekannt und in der Literatur, beispielsweise den o.g. Schriften, beschrieben.

Aus den TPU lassen sich expandierte, d.h geschäumte, TPU-Partikel herstellen, insbesondere durch die in der Literatur beschriebenen und dem Fachmann bekannten Suspensions- bzw. Extrusionsverfahren. Die geschäumten E-TPU-Partikel können bei diesen Verfahren direkt oder indirekt, d.h. über treibmittelhaltige ungeschäumte expandierbare TPU-Partikel als Zwischenprodukt, erhalten werden (im Rahmen der vorliegenden Erfindung werden die Begriffe "expandierte TPU-Partikel" und "expandierte TPU-Schaumstoffpartikel" gleichbedeutend verwandt und bezeichnen einzelne geschäumte TPU-Partikel).

Beim Suspensionsverfahren wird das TPU als Granulat mit Wasser, einem Suspensionshilfsmittel und einem Treibmittel in einem geschlossenen Reaktor bis über die Erweichungstemperatur des Granulats erhitzt. Dabei werden die Polymerpartikel mit dem Treibmittel imprägniert. Anschließend kann man entweder die heiße Suspension abkühlen, wobei sich die Partikel unter Einschluss des Treibmittels verfestigen und den Reaktor entspannen. Die auf diese Weise erhaltenen treibmittelhaltigen expandierbaren Partikel werden in einem nachfolgenden Schritt durch Erwärmen zu den expandierten Partikeln verschäumt. Alternativ kann man die heiße Suspension ohne Abkühlen schlagartig entspannen (Explosionsexpansionsverfahren), wobei die erweichten, treibmittelhaltigen Partikel unmittelbar zu den expandierten Partikeln aufschäumen, siehe z.B. WO 94/20568.

Beim Extrusionsverfahren wird das TPU in einem Extruder unter Aufschmelzen mit -einem Treibmittel vermischt, das dem Extruder zugeführt wird. Die treibmittelhaltige Mischung wird entweder unter solchen Druck- und Temperaturbedingungen ausgepresst und granuliert, dass das TPU-Granulat nicht schäumt (expandiert), wozu beispielsweise eine Unterwassergranulierung verwendet wird, die bei einem Wasserdruck von mehr als 2 bar betrieben wird. Man erhält treibmittelhaltige, expandierbare Partikel, die in einem anschließenden Schritt durch Erwärmen zu den expandierten Partikeln verschäumt werden. Alternativ kann man die Mischung auch ohne Überdruck auspressen und granulieren. Dabei schäumt der Schmelzestrang auf und man erhält durch Granulierung die expandierten Partikel.

Die zur Herstellung der erfindungsgemäßen Stallbodenbeläge enthaltend eine Schaumstoffmatte geeigneten expandierten TPU-Schaumstoffpartikel haben bevorzugt Schüttdichten im Bereich von 10 kg/m³ bis 300 kg/m³, bevorzugt 25 kg/m³ bis 200 kg/m³, besonders bevorzugt von 50 bis 150 kg/m³.

Die expandierten TPU-Partikel sind in der Regel zumindest annähernd kugelförmig und weisen üblicherweise einen Durchmesser von 0,2 bis 50 mm, bevorzugt 0,5 bis 20 mm und insbesondere 1 bis 15 mm auf. Bei nicht kugelförmigen, z.B. ellipsoidischen, länglichen oder zylinderförmigen Partikeln, ist mit Durchmesser die längste Abmessung gemeint.

Aus den expandierten TPU-Partikeln kann man nach dem Fachmann grundsätzlich bekannten Verfahren expandierte TPU-Partikelschäume herstellen (im Rahmen der vorliegenden Erfindung werden die Begriffe "expandierter TPU-Partikelschaum" und "expandierte TPU-Partikelschaumstoff" gleichbedeutend verwandt und bezeichnen ein durch Verkleben und/oder Verschweißen einzelner geschäumter TPU-Partikel erhältliches Schaumstoff-Formteil). Beispielsweise können die expandierten TPU-Partikel in kontinuierlichen oder diskontinuierlichen Verfahren mit Hilfe eines Klebemittels miteinander verklebt werden, beispielsweise mit dem Fachmann bekannten Polyurethan-Klebern. Bevorzugt können die expandierten TPU-Partikel in kontinuierlichen oder diskontinuierlichen Verfahren unter Wärmeeinwirkung miteinander verschweißt werden, wobei grundsätzlich während des Verschweißens auch Klebemittel zugesetzt werden können. Die expandierten TPU-Partikel werden zur Ausbildung der expandierten TPU-Partikelschäume aber besonders bevorzugt unter Wärmeeinwirkung mittels Heißluft oder insbesondere Wasserdampf miteinander verschweißt; in einer ganz besonders bevorzugten Ausführungsform werden die expandierten TPU-Partikel ohne Einsatz von Klebemitteln mittels Heißluft oder insbesondere Wasserdampf verschweißt.

Aus den expandierten TPU-Partikeln kann man nach einem der ganz besonders bevorzugten Verfahren expandierte TPU-Partikelschäume herstellen, indem man die E-TPU-Partikel in einer geschlossenen Form, insbesondere einem Formteilautomaten, unter Wärmeeinwirkung miteinander verschweißt, wie beispielsweise beschrieben in DE-A 25 42 452. Dazu füllt man die Partikel in eine Form und leitet nach Schließen der Form Heißluft, bevorzugt aber Wasserdampf ein, wodurch die Partikel weiter expandieren und bei Temperaturen von bevorzugt zwischen 100°C und 140°C miteinander zum expandierten TPU-Partikelschaum verschweißen. Die expandierten TPU-Partikelschäume sind besonders bevorzugt in Form einer Schaumstoffmatte ausgeführt und in dieser Form grundsätzlich auch ohne weiteren Verarbeitungsschritt zur Verwendung als Stallbodenbelag geeignet.

Die Dicke der zur Verwendung als bzw. Herstellung von Stallbodenbelägen geeigneten Schaumstoffmatten umfassend expandierten TPU-Partikelschaum hängt von deren speziellen Verwendung ab und liegt in der Regel im Bereich von 20 bis 150 mm, für Kuhmatratzen bevorzugt im Bereich von 30 bis 120 mm.

Die aus den E-TPU-Partikeln hergestellten expandierten TPU-Partikelschäume, insbesondere in Form der beschriebenen Schaumstoffmatten, haben vorzugsweise eine Dichte im Bereich von 35 bis 300 kg/m³, insbesondere von 90 bis 250 kg/m³. Die Dichte der expandierte TPU-Partikelschäume lässt sich beispielsweise durch Wahl der Schüttdichte der E-TPU-Partikel und dem Verdichtungsverhältnis im Formteilautomat bzw. in einer Presse einstellen. In der Regel liegt das Verdichtungsverhältnis (Formteildichte/Schüttdichte) im Bereich von 1,5 bis 3.

Eine erfindungsgemäß bevorzugte Schaumstoffmatte, insbesondere zur Verwendung als Kuhmatratze, umfassend E-TPU-Partikelschaumstoff weist nach den Prüfungsbedingungen der Deutschen Landwirtschafts-Gesellschaft e.V. (DLG) bezüglich der Weichheit (Kugeleindruckversuch im Neuzustand mit einer Kalotte mit einem Radius r = 120 mm und einer Eindringkraft von 2000 N) eine Eindringtiefe von 20 mm oder mehr auf.
Bezüglich der Dauertrittbelastung (Dauertrittbelastung auf einem Prüfstand mit einem runden Stahlfuß mit einem Durchmesser von 105 mm und einer Aufstandsfläche von 75 cm², mit 5 mm breitem Ring an der Peripherie der Sohle, der die übrige Fläche 1 mm überragt, mit 100000 Wechselbelastungen bei 10000 N) weist eine bevorzugte Schaumstoffmatte, insbesondere zur Verwendung als Kuhmatratze, keinen signifikanten Verschleiß und eine bleibende Verformung von maximal 50%, bevorzugt von maximal 30%, besonders bevorzugt von maximal 10%, bezogen auf die Dicke der Schaumstoffmatte im Neuzustand, auf.

Die wie beschrieben herstellbaren Schaumstoffmatten umfassend E-TPU-Partikelschaumstoff sind zur Verwendung als bzw. Herstellung von Stallbodenbelägen, insbesondere Kuhmatratzen, geeignet.

Die Schaumstoffmatten umfassend expandierten TPU-Partikelschaumstoff sind leicht und mechanisch einfach durch Sägen, Fräsen oder Stanzen bearbeitbar. Die Verlegung und/oder Verbindung einzelner Matten untereinander kann daher relativ einfach durch die verschiedensten Techniken erfolgen z.B. durch Nut- und Feder- oder Schwalbenschwanz-Verbindungen.

Zur weiteren Erhöhung der Abrieb- und Rutschfestigkeit kann die Schaumstoffmatte umfassend expandierten TPU-Partikelschaumstoff auf einer oder beiden Seiten mit einer Deckschicht, insbesondere aus Gummi (vulkanisiertem natürlichem oder synthetischem Kautschuk), Polyethylen, Polypropylen, Polyvinylchlorid oder Polyester mit einer Dicke im Bereich von 0,5 bis 5 mm versehen werden. Das Vorhandensein einer Deckschicht auf einer oder beiden Seiten der Schaumstoffmatte ist dann bevorzugt, wenn der expandierte TPU-Partikelschaumstoff nicht aus miteinander verschweißten, sondern lediglich aus miteinander verklebten expandierten TPU-Partikeln gebildet wird, da die Deckschicht bei dieser Ausführungsform des verklebten expandierten TPU-Partikelschaumstoffs eine deutliche Verringerung des Verschleißes bei Dauerbelastung bewirkt.

Die E-TPU Schaumstoffpartikel sind überwiegend, bevorzugt zu mehr als 95%, geschlossenzellig. Durch geeignete Verarbeitung können daher Schaumstoffmatten mit geringem Zwickelanteil und einer wasserundurchlässigen E-TPU-Partikelschaumstoffschicht hergestellt werden. Für Stallbodenbeläge umfassend Matten aus E-TPU-Partikelschaumstoff, für die eine Flüssigkeitsdurchlässigkeit erwünscht ist, können die Schaumstoffmatten (mit oder ohne Deckschicht) einfach mit entsprechenden Ablaufkanälen durch Bohren oder Stanzen versehen werden.

Der erfindungsgemäße Stallbodenbelag ist somit einfach und kostengünstig herstellbar, leicht und einfach zu verlegen und weist gegenüber bekannten Stallbodenbelägen eine verbesserte Kombination aus ausgewogener Weichheit (entsprechend einer ausgeprägten, aber nicht zu hohen Eindringtiefe), geringer bleibender Verformung bei Dauerbelastung, geringem Verschleiß bei Dauerbelastung und geringer Feuchtigkeitsaufnahme auf.

Die Erfindung wird anhand der nachfolgenden Beispiele näher erläutert.

### Beispiele:

### Testmethoden:

### Druckfestigkeit und Stauchung (als ein Maß für die Weichheit und die Eindringtiefe im fabrikneuen Zustand bzw. nach Dauergebrauch):

An im folgenden noch beschriebenen, neu hergestellten Matten bzw. aus diesen hergestellten Normprüfkörpern wurden sowohl die Druckfestigkeit [kPa] bei einer Stauchung von 75% (an Normprüfkörper, Vorschubgeschwindigkeit 100 mm/min), als auch die Stauchung [%] bei einer konstanten Kraft von 250 kPa (Flächenbelastung an Matten mit den Maßen 18 cm x 18 cm, Vorschubgeschwindigkeit 50 mm/min) in Analogie zu EN ISO 844 vom Juni 2009 (Deutsche Fassung) bestimmt.
Die Stauchung [%], gemessen bei einer konstanten Kraft von 250 kPa (Flächenbelastung an Matten mit den Maßen 18 cm x 18 cm) und einer Vorschubgeschwindigkeit von 50 mm/min in Analogie zu EN ISO 844 vom Juni 2009 (Deutsche Fassung), wurde auch an denselben Matten nach dem im folgenden noch beschriebenen Dauerschwingversuch bestimmt.
Aus diesen Maßen für Weichheit bzw. Eindringtiefe vor und nach Dauerbelastung läßt sich ebenfalls die Eignung einer Matte als Stallbodenbelag je nach Gewicht des Nutztiers abschätzen. Zu hohes Gewicht auf einer zu weichen Matte führt zu einer zu großen Eindringtiefe und damit zu einer Verschlechterung des Liegekomforts.

### Dauerschwingversuch "DSV" (als ein Maß für die bleibende Verformung nach Dauerbelastung):

An im folgenden noch beschriebenen, neu hergestellten Matten wurde ein Dauerschwingversuch zwischen planparallelen Platten durchgeführt. Dabei wurden mit einer Frequenz von 0,5 Hz 40 000 Lastwechsel (dynamische Belastung) im Druckbereich von 0,05 N (Vorlast) bis 8,1 kN an Prüfkörpern mit den Maßen 18 cm x 18 cm (324 cm²), entsprechend einer maximalen Flächenbelastung von 250 kPa, durchgeführt, und anschließend die Resthöhe [%] der Matten bezogen auf die Ausgangshöhe vor der dynamischen Belastung bestimmt.
Der Dauerschwingversuch simuliert die Dauerbelastung durch Tritte und Liegen.

### Verschleiß bei Dauertrittbelastung:

Der Verschleiß bei Dauertrittbelastung an im folgenden noch beschriebenen, neu hergestellten Matten wurde auf einem Prüfstand mit einem runden Stahlfuß gemessen, wobei der Stahlfuß eine Aufstandsfläche von 75 cm² besaß und mit einem 5 mm breitem Ring an der Peripherie der Stahlfußsohle, der die übrige Stahlfußfläche 1 mm überragte, versehen war. Nach 100.000 Wechselbelastungen bei 10.000 N wurde der Verschleiß der Matten gemäß folgender Skala visuell bewertet.
- - hoher Verschleiß
- mäßiger Verschleiß
∘ geringer Verschleiß
+ kaum Verschleiß
++ kein Verschleiß

### Abriebtest (als ein Maß für Verschleiß bei Dauerbelastung):

Die Abriebfestigkeit der im folgenden noch beschriebenen, neu hergestellten Matten wurde mit einem Stempel mit kreisförmiger Auflagefläche (61,5 cm²) gemessen. Die Auflagefläche bestand aus Schmirgelleinen (Körnung 280). Mit einer Auflagekraft von 500 N erfolgte jeweils eine 180°-Drehung im und gegen den Uhrzeigersinn (ein Doppelzyklus). Nach10 000 Doppelzyklen wurde die Abriebtiefe [mm] gemessen und anschließend entsprechend der folgenden Notenskala bewertet:
- - hoher Abrieb
- mäßiger Abrieb
∘ geringer Abrieb
+ kaum Abrieb
++ kein Abrieb
Bei Matten mit Deckschicht wurde an der Deckschichtoberfläche geprüft. Bei Matten ohne Deckschicht wurde direkt an der Mattenoberfläche (d.h. der Schaumstoff- oder Gummioberfläche) geprüft.

### Flüssigkeitsaufnahme bzw. Flüssigkeitsdurchlässigkeit:

Die Flüssigkeitsaufnahme [Gew.-%] wurde in Anlehnung an DIN ISO 2896 durch einwöchiges Untertauchen von kubischen Prüfkörpern mit einer Kantenlänge von 50 mm in Wasser (23°C) bestimmt (angegeben wird die Gewichtszunahme nach Wässerung in % bezogen auf das Ausgangsgewicht des Prüfkörpers vor Wässerung).

### Herstellung von Matten zur Verwendung als Stallbodenbeläge:

Aus den in Tabelle 1 genannten Ausgangsmaterialien wurden für die Beispiele 1, 2 und 3 ein handelsübliches thermoplastisches Polyurethan (Elastollan^{®} 1180, Shore A-Härte 80) in Granulatform nach dem Suspensionsverfahren mit einem Treibmittel in einem Autoklaven erhitzt und ohne vorherige Abkühlung zu expandierten TPU-Partikeln mit den in Tabelle 1 aufgeführten Schüttdichten schnell entspannt. Die so gebildeten expandierten TPU-Partikel wurden anschließend für das Beispiel 1 mit Wasserdampf in einem Formteilautomat zu einer Schaumstoffmatte der in Tabellen 2 und 3 angegebenen Dicke und Formteildichte verschweißt. Für die Beispiele 2 und 3 wurden die Schaumstoffpartikel mit einem PU-Präpolymeren verklebt. Im Beispiel 2 wurde die verklebte Matte mit einer zusätzlichen Deckschicht aus PVC ausgerüstet.

Aus den weiteren, ebenfalls in Tabelle 1 genannten Ausgangsmaterialien wurden für die Vergleichsbeispiele V-4 bis V-8 nach üblichen Verfahren Schaumstoff- bzw. Gummimatten zur Verwendung als Stallbodenbeläge hergestellt.

Die in V-7 eingesetzten miteinander verschweißten expandierten Polyethylen-Partikel entsprechen einem in der eingangs diskutierten EP 1 917 852 A1 für die Schaumstoffschicht S1 als bevorzugt beschriebenen Material.

Die so hergestellten Matten wurden jeweils nach den vorstehend beschriebenen Testmethoden bezüglich ihrer Eigenschaften untersucht. Die entsprechenden Ergebnisse werden in Tabelle 2 wiedergegeben.

**Tabelle 1:**

| Beispiel* | Ausgangsmaterial | Schaumstoffpartikel-Schüttdichte [kg/m³] | Schaumstoffmorphologie |
|---|---|---|---|
| 1 | Schaumstoffmatte aus mit Wasserdampf verschweißten E-TPU-Partikeln | 90 | geschlossenzellig |
| 2 | Schaumstoffmatte aus mit PU-Präpolymer verklebten E-TPU-Partikeln + PVC-Deckschicht | 90 | geschlossenzellig |
| 3 | Schaumstoffmatte aus mit PU-Präpolymer verklebten E-TPU-Partikeln | 70 | geschlossenzellig |
| V-4 | Schaumstoffmatte aus PUR-Weichschaumstoff | n.a.* | offenzellig |
| V-5 | Schaumstoffmatte aus PURviskoelastischem Schaumstoff | n.a. | offenzellig |
| V-6 | Schaumstoffmatte aus Flockenverbundschaumstoff | n.a. | offenzellig |
| V-7 | Schaumstoffmatte aus verschweißten expandierten Polyethylenpartikeln (EPE) | n.g.* | geschlossenzellig |
| V-8 | Matte aus Vollgummi | n.a. | kompakt |

| | | | |
|---|---|---|---|
| * vorangestelltes "V-" bedeutet nicht-erfindungsgemäßes Vergleichsbeispiel; "n.a." bedeutet nicht anwendbar, "n.g" bedeutet nicht geprüft. | | | |

**Tabelle 2:**

| Beispiel* | Mattendichte [kg/m³] | Mattendicke [mm] | Druckfestigkeit [kPa] | Stauchung [%] | | Dauerschwingversuch (DSV) Resthöhe [%] | Verschleiß bei Dauertrittbelastung | Abrieb | Flüssigkeitsaufnahme [Gew-%] |
|---|---|---|---|---|---|---|---|---|---|
| | | | | vor DSV | nach DSV | | | | |
| 1 | 250 | 40 | 1790 | 40,2 | 43,1 | 88,1 | ++ | ++ | < 10 |
| 2** | 100/ 103*** | 40/ 42**** | n.g.* | n.g. | n.g. | n.g. | + | O | <10 |
| 3 | 100 | 40 | n.g. | n.g. | n.g. | n.g. | ++ | -- | < 10 |
| V-4 | 120 | 40 | 83 | 86,0 | 86,5 | 84,1 | n.g. | -- | 440 |
| V-5 | 75 | 40 | 20 | 92,5 | 92,9 | 35,3 | n.g. | -- | 580 |
| V-6 | 275 | 40 | 975 | 60,9 | 64,3 | 84,6 | n.g. | - | 300 |
| V-7 | 60 | 40 | 510 | 63,3 | 82,6 | 21,8 | n.g. | - | 54 |
| V-8 | 1170 | 40 | 43 000 | 16,6 | 19,1 | 93,8 | n.g. | ++ | <10 |

| | | | | | | | | | |
|---|---|---|---|---|---|---|---|---|---|
| * vorangestelltes "V-" bedeutet nicht-erfindungsgemäßes Vergleichsbeispiel; "n.g" bedeutet nicht geprüft. ** Matte aus E-TPU-Partikelschaum mit PVC-Deckschicht *** Mattendichte ohne/mit Deckschicht **** Dicke ohne/mit Deckschicht | | | | | | | | | |

Nur die erfindungsgemäßen Beispiel 1 und 2 erfüllen uneingeschränkt alle Anforderungen bezüglich Weichheit, Dauergebrauchsbeständigkeit (geringe bleibende Verformung und geringer Verschleiß); Abriebfestigkeit und geringe Flüssigkeitsaufnahme.
Bei einer Matte aus E-TPU-Partikelschaum, die durch Verklebung von E-TPU-Partikeln hergestellt wurde (Beispiel 3), ist für die vollständige Erfüllung der Anforderungen an die Abriebsbeständigkeit die Verwendung einer zusätzlichen Deckschicht empfehlenswert. Eine in der Praxis im Dauergebrauch mögliche Beschädigung der Deckschicht zieht jedoch aufgrund der sehr geringen Feuchtigkeitsaufnahme des E-TPU-Partikelschaums nicht die Nachteile einer erhöhten Fäkalienaufnahme nach sich.
Die Matten gemäß Vergleichsbeispielen V-4 bis V-7 besitzen zwar sehr hohe Weichheit. Diese Weichheit (geringe Druckfestigkeit) ist jedoch so hoch, dass bei der entsprechenden Belastung durch schwere Nutztiere eine Matte zu stark durchgedrückt wird und der Liegekomfort in unakzeptablem Maß verloren geht. Die Dichte eines PUR-Weichschaums bzw. seine Druckfestigkeit kann auch zur Lösung des Problems der zu großen Weichheit nicht beliebig erhöht werden. Außerdem ist bei Verwendung von PUR-Weichschaumstoff als Kernmaterial wegen dessen Offenzelligkeit und damit dessen starker Flüssigkeitsaufnahme die Verwendung einer den Kern allseitig umschließenden Deckschicht unabdingbar.
Mit einem Flockenverbundschaumstoff gemäß V-6 kann die Druckfestigkeit entsprechend eingestellt werden, jedoch ist der Abrieb so hoch, dass eine Verwendung nur mit Deckschicht möglich ist. Selbst mit Deckschicht ist dieses Material aber nachteilig, weil es eine große Flüssigkeitsaufnahmefähigkeit besitzt, die bei im Dauergebrauch immer möglicher Beschädigung der Deckschicht zu entsprechender Aufnahme von Fäkalien führt.
Die Verwendung eines geschlossenzelligen Polyolefinschaumstoffes gemäß V-7 bedingt zwar eine verringerte Feuchtigkeitsaufnahme. Die bleibenden Verformungen im Dauerschwingversuch sowie der Abrieb sind jedoch deutlich erhöht.

Bei Verwendung von Gummi (vulkanisiertem natürlichem oder synthetischem Kautschuk) als Mattenmaterial gemäß V-8 kann die gewünschte Weichheit bei Weitem nicht erreicht werden.

Die Beispiele belegen, daß die erfindungsgemäßen Stallbodenbeläge eine verbesserte Kombination aus ausgewogener Weichheit (entsprechend einer ausgeprägten, aber nicht zu hohen Eindringtiefe), geringer bleibender Verformung bei Dauerbelastung, geringem Verschleiß bzw. Abrieb bei Dauerbelastung und geringer Feuchtigkeitsaufnahmen aufweisen als aus dem Stand der Technik bekannte Beläge. Die erfindungsgemäßen Stallbodenbeläge sind leicht und einfach zu verlegen. Die erfindungsgemäßen Stallbodenbeläge sind außerdem durch einfache Herstellverfahren, und somit kostengünstig, erhältlich.

## Patentansprüche

1. Stallbodenbelag, enthaltend eine Schaumstoffmatte umfassend expandierten thermoplastischen Polyurethan-Partikelschaum.

2. Stallbodenbelag nach Anspruch 1, **dadurch gekennzeichnet, daß** das thermoplastische Polyurethan eine Shore-Härte im Bereich von Shore A 50 bis Shore D 75 aufweist, gemessen gemäß DIN ISO 7619-1 DE an Prüfkörpern aus nicht-expandiertem thermoplastischem Polyurethan mit einer Dicke von 6 mm.

3. Stallbodenbelag nach Ansprüchen 1 bis 2, **dadurch gekennzeichnet, daß** die Schaumstoffmatte eine Dichte im Bereich von 35 bis 300 kg/m³ aufweist.

4. Stallbodenbelag nach Ansprüchen 1 bis 3, **dadurch gekennzeichnet, daß** die Dicke der Schaumstoffmatte im Bereich von 20 bis 150 mm liegt.

5. Stallbodenbelag nach Ansprüchen 1 bis 4, **dadurch gekennzeichnet, daß** die Schaumstoffmatte mit einer Deckschicht aus Gummi, Polyethylen, Polypropylen, Polyvinylchlorid oder Polyester mit einer Dicke im Bereich von 0,5 bis 5 mm versehen ist.

6. Stallbodenbelag nach Ansprüchen 1 bis 5, **dadurch gekennzeichnet, daß** der expandierte thermoplastische Polyurethan-Partikelschaum aus durch Wärmeinwirkung miteinander verschweißten expandierten thermoplastischen Polyurethan-Partikeln gebildet wird.

7. Stallbodenbelag nach Anspruch 5, **dadurch gekennzeichnet, daß** der expandierte thermoplastische Polyurethan-Partikelschaum aus mittels eines Klebemittels miteinander verklebten expandierten thermoplastischen Polyurethan-Partikeln gebildet wird.

8. Verfahren zur Herstellung eines Stallbodenbelags gemäß Ansprüchen 1 bis 7, **dadurch gekennzeichnet, daß** Partikel aus expandiertem thermoplastischem Polyurethan mit einer Schüttdichte im Bereich von 10 bis 300 kg/m³ mit Heißluft oder Dampf unter Bildung einer Schaumstoffmatte verschweißt und/oder mittels eines Klebemittels unter Bildung einer Schaumstoffmatte verklebt werden.

9. Verwendung von expandierten thermoplastischen Polyurethan-Schaumstoffpartikeln zur Herstellung eines Stallbodenbelags.

10. Verwendung von expandiertem thermoplastischen Polyurethan-Partikelschaumstoff zur Herstellung eines Stallbodenbelags.

## Claims

1. A stall floor covering comprising a foam mat comprising expanded thermoplastic polyurethane-bead foam.

2. The stall floor covering according to claim 1, wherein the Shore hardness of the thermoplastic polyurethane is in the range from 50 Shore A to 75 Shore D, measured in accordance with DIN ISO 7619-1 DE on test specimens made of non-expanded thermoplastic polyurethane of thickness 6 mm.

3. The stall floor covering according to claims 1 and 2, wherein the density of the foam mat is in the range from 35 to 300 kg/m³.

4. The stall floor covering according to claims 1 to 3, wherein the thickness of the foam mat is in the range from 20 to 150 mm.

5. The stall floor covering according to claims 1 to 4, wherein the foam mat has been provided with an outer layer made of rubber, polyethylene, polypropylene, polyvinyl chloride, or polyester, with a thickness in the range from 0.5 to 5 mm.

6. The stall floor covering according to claims 1 to 5, wherein the expanded thermoplastic polyurethane-bead foam is formed from expanded thermoplastic polyurethane beads fused to one another via exposure to heat.

7. The stall floor covering according to claim 5, wherein the expanded thermoplastic polyurethane-bead foam is formed from expanded thermoplastic polyurethane beads adhesive-bonded to one another by means of an adhesive.

8. A process for producing a stall floor covering according to claims 1 to 7, which comprises using hot air or steam to fuse, and/or using an adhesive to adhesive-bond, beads made of expanded thermoplastic polyurethane with a bulk density in the range from 10 to 300 kg/m³, with formation of a foam mat.

9. The use of expanded thermoplastic polyurethane-foam beads for producing a stall floor covering.

10. The use of expanded thermoplastic polyurethane-bead foam for producing a stall floor covering.

## Revendications

1. Revêtement de sol d'écurie contenant un tapis de mousse comprenant une mousse de particules de polyuréthanne thermoplastique expansé.

2. Revêtement de sol d'écurie selon la revendication 1, **caractérisé en ce que** le polyuréthanne thermoplastique présente une dureté Shore comprise dans la plage de Shore A 50 à Shore D 75, mesurée selon DIN ISO 7619-1 DE sur des éprouvettes en un polyuréthanne thermoplastique non-expansé ayant une épaisseur de 6 mm.

3. Revêtement de sol d'écurie selon les revendications 1 à 2, **caractérisé en ce que** le tapis de mousse présente une masse volumique comprise dans la plage de 35 à 300 kg/m³.

4. Revêtement de sol d'écurie selon les revendications 1 à 3, **caractérisé en ce que** l'épaisseur du tapis de mousse est comprise dans la plage de 20 à 150 mm.

5. Revêtement de sol d'écurie selon les revendications 1 à 4, **caractérisé en ce que** le tapis de mousse est pourvu d'une couche de couverture en caoutchouc, polyéthylène, polypropylène, poly(chlorure de vinyle) ou polyester ayant une épaisseur comprise dans la plage de 0,5 à 5 mm.

6. Revêtement de sol d'écurie selon les revendications 1 à 5, **caractérisé en ce que** la mousse de particules de polyuréthanne thermoplastique expansé est formée de particules de polyuréthanne thermoplastique expansé soudées les unes aux autres sous l'effet de la chaleur.

7. Revêtement de sol d'écurie selon la revendication 5, **caractérisé en ce que** la mousse de particules de polyuréthanne thermoplastique expansé est formée à partir de particules de polyuréthanne thermoplastique expansé collées les unes aux autres à l'aide d'un adhésif.

8. Procédé de fabrication d'un revêtement de sol d'écurie selon les revendications 1 à 7, **caractérisé en ce que** des particules en polyuréthanne thermoplastique expansé, ayant une masse volumique apparente comprise dans la plage de 10 à 300 kg/m³, sont soudées à l'air chaud ou à la vapeur avec formation d'un tapis de mousse et/ou sont collées à l'aide d'un adhésif, avec formation d'un tapis de mousse.

9. Utilisation de particules de mousse de polyuréthanne thermoplastique expansé pour la fabrication d'un revêtement de sol d'écurie.

10. Utilisation d'une mousse de particules de polyuréthanne thermoplastique expansé pour fabriquer un revêtement de sol d'écurie.
